# EUROPÄISCHE PATENTANMELDUNG

(11) **EP 1 260 133 A1**
(43) Veröffentlichungstag der Anmeldung: **27.11.2002**
(21) Anmeldenummer: 02007537.0
(22) Anmeldetag: 03.04.2002
(51) Int. Cl.: A01F 15/14

(54) **Rundballenpresse**

(30) Priorität: 25.05.2001 DE 10125569
(71) Anmelder: DEERE & COMPANY, Moline, Illinois 61265-8098 (US)
(72) Erfinder: Georget, Claude, 70100 Chargey les Gray (FR)
(74) Vertreter: Magin, Ludwig Bernhard

(57) **Zusammenfassung**

2.1. Bei bekannten Rundballenpressen (10) wird Garn (30) mehrfach im gleichen Bereich um einen Rundballen (16) geschlungen, damit sich die Garnstränge gegenseitig halten und den Rundballen (16) zusammenhalten. In einem Bindearm (22) oder stromaufwärts von diesem ist eine Garnbremse vorgesehen, die die Spannung in dem Garn (30) etwas erhöht. Dabei ist es nachteilig, dass die Spannung nur gering erhöht werden kann, weil sich das Garn (30) anderenfalls nach dem Trennen zusammenzieht und nicht mehr genügend weit aus dem Bindearm (22) heraushängt, um zur Einleitung des nächsten Bindevorgangs von dem Erntegut erfasst werden zu können.
2.2. Es wird eine Garnbremse (28) zwischen der Trennvorrichtung (24) und zwar insbesondere dem Messer (36) und dem Rundballen (16) vorgesehen.
2.3. Rundballenpressen (10) werden in der Landwirtschaft eingesetzt.

## Beschreibung

Die Erfindung betrifft eine Rundballenpresse mit einem Pressraum, einem Bindearm, einer Trennvorrichtung und einer Garnbremse.

Die US 4627 340 offenbart eine Rundballenpresse mit einem Bindearm, einer Garnbremse, einer Trennvorrichtung und einem Garnhalter. Die Garnbremse befindet sich im Auslassbereich des Bindearms und übt während des Garnlaufs einen bestimmten Widerstand aus, der eine bestimmte Spannung des Garns und damit eine bestimmte Haltekraft ausübt. Die Haltekraft rührt daher, dass die letzten Garnstränge zwischen darunter liegenden Strängen oder in dem Pressgut aufgrund der Reibung gehalten werden. Des weiteren verhindert die Garnbremse, dass das Garn nach dem Trennvorgang in den Bindearm zurückschnurrt. Die Trennvorrichtung befindet sich zwischen dem Rundballen und dem Garnhalter. Der Garnhalter befindet sich am Rahmen der Rundballenpresse nach innen von deren Seitenwand beabstandet, und zwar zwischen dem Bindearm und der Trennvorrichtung. Der Garnhalter hält das dem Bindearm zugehörige Garnstück nach dem Trennvorgang, damit das Garn zum Starten des Bindevorgangs aufgrund der Bewegung des Bindearms aus letzterem herausgezogen werden kann.

Das der Erfindung zugrunde liegende Problem wird darin gesehen, dass die bekannte Garnbremse nur eine begrenzte Spannung aufbauen kann, da ansonsten das Garn bei der Bewegung des Bindearms aus dem Garnhalter gezogen wird oder nach der Erfassung durch das Erntegut nicht mitgenommen wird.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird der abgeschnittene Endbereich des Garns von dem Rundballen durch die und aus der Garnbremse gezogen, während der der Garnrolle zugehörige Bereich spannungslos aus dem Bindearm hängt und für den nächsten Bindevorgang bereit ist. Da die Spannung in dem bereits abgeschnittenen Teil besteht, hingegen aber nicht in dem Abschnitt, der sich noch in dem Bindearm befindet, schnurrt der im Bindearm befindliche Teil nach dem Trennvorgang nicht zusammen, sondern hängt unverkürzt aus dem Bindearm. Die Spannung des Garns kann um das Vierfache und mehr gegenüber bisherigen Garnbremsen gesteigert werden.

Wenn eine Feder mit Windungen oder mehrere Federn, z. B. aufeinander gepresste Tellerfedern oder Blattfedern, benutzt werden, ist es möglich, dass dann, wenn das Garn durch die Garnbremse gezogen wird, es seine Spannung beibehält, und - je nach deren Lage - wird die Spannung dabei erhöht, wenn sich das Garn tiefer in die Feder(n) bzw. zwischen die Federelemente hineinzieht.

Eine einfache und kostengünstige Bauweise ist mit einer Schraubenzugfeder gegeben, zwischen deren Windungen das Garn hineingezogen werden kann, zumal abgerundete Kanten das Garn nicht beschädigen.

Das Einführen des Garns zwischen einzelne Federn oder Federelemente findet stets zuverlässig statt, wenn ein Fangende, z. B. ein abstehender Windungsanfang, ein Finger oder dergleichen vorgesehen ist.

Zwar wäre es möglich, die Feder einstückig mit einem benachbarten Teil auszubilden oder sie bzw. diese anzuschweißen oder sonstwie dauerhaft zu befestigen; insbesondere für eine Nachrüstung ist es aber vorteilhaft, wenn die Feder(n) ein Halteende aufweisen, durch das z. B. eine Schraube gesteckt werden kann, so dass auch die Federspannung nicht beeinträchtigt wird.
Da zuweilen der Abstand zwischen der Stirnseite des Rundballens und der letzten Garnlage je nach der Art des Pressguts oder der weiteren Verarbeitung des Rundballens angepasst wird, kann die räumliche Zuordnung der Garnbremse und eines verwendeten Abstandshalters dadurch gewahrt werden, dass diese miteinander verbunden, nämlich aufeinander angeordnet sind.

Nachdem das Pressgut unterschiedlich steif ist, kann ein ausreichendes Eindringen des Garns in die Ballenoberfläche jeweils dadurch sicher gestellt werden, dass die Halte- bzw. Bremskraft der Garnbremse einstellbar ist.

Eine erfindungsgemäße Garnbremse kann besonders kostengünstig verwirklicht werden, wenn hierfür entweder ein Zinken einer Pick-up oder einer Haspel verwendet wird, oder wenn sie danach gebildet wird. Derartige bekannte Zinken werden in sehr hoher Zahl als Halbzeuge angeboten.

In der Zeichnung ist ein nachfolgend näher beschriebenes Ausführungsbeispiel der Erfindung dargestellt. Es zeigt:
- Fig. 1: eine Rundballenpresse in schematischer Darstellung in einer perspektivischen Ansicht von vorne und
- Fig. 2: eine Garnbremse in vergrößerter Darstellung.

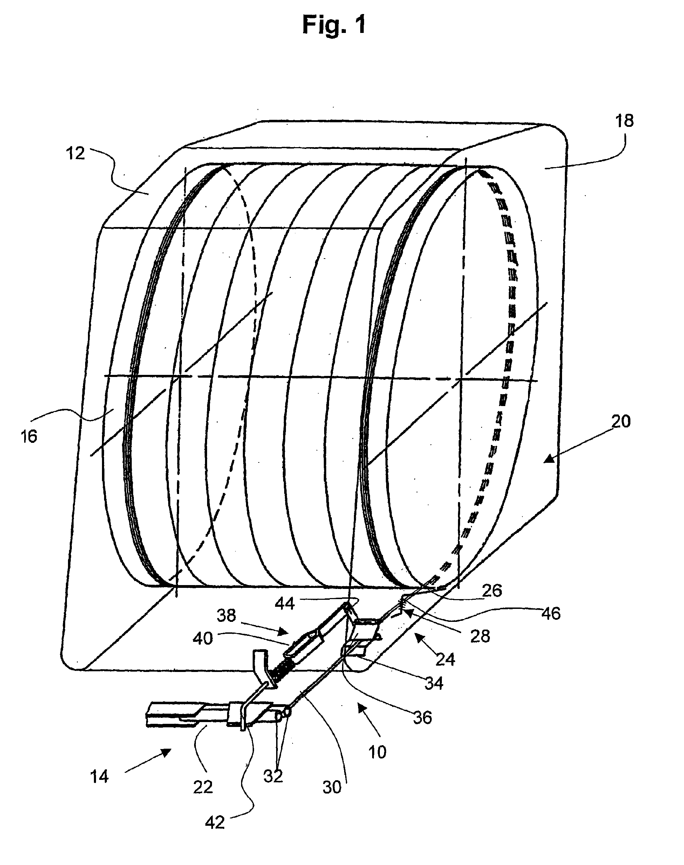

Figur 1 deutet eine Rundballenpresse 10 an, von der ein Gehäuse 12 und eine Bindevorrichtung 14 zu erkennen sind.

Bei der Rundballenpresse 10 kann es sich um jede bekannte Art einer Rundballenpresse 10 handeln, also mit fester oder veränderlicher Ballenkammer, mit Vorkammer oder dergleichen. Derartige Rundballenpressen werden z. B. von JOHN DEERE angeboten und bedürfen daher keiner eingehenden Erläuterung. Es sei lediglich angemerkt, dass eine solche Rundballenpresse 10 auf Rädern abgestützt über den Boden bewegt wird und dabei während des Betriebs Erntegut aufnimmt, um es zu einem Rundballen 16 zu formen.

Das Gehäuse 12 enthält unter anderem Seitenwände 18, zwischen denen ein Pressraum 20 zur Bildung des Rundballens 16 gebildet wird. Weitere Einzelheiten, wie die Pressmittel, Auslassgatter etc. bedürfen hier keiner Erläuterung.

Die Bindevorrichtung 14 enthält einen Bindearm 22, eine Trennvorrichtung 24, einen Abstandhalter 26 und eine Garnbremse 28.

Die Bindevorrichtung 14 dient dazu, am Ende des Ballenbildungsvorgangs schraubenlinienförmig Garn 30 auf den Umfang des sich drehenden Rundballens 16 zu wickeln und nahe dessen Stirnfläche mehrere Garnstränge aufeinander zu wickeln, die sich in das Erntegut hineinziehen und zwischen den bereits gelegten Strängen verkeilen, wodurch sie auf der Umfangsfläche gehalten werden. Je höher dabei die Zugkraft auf das Garn 30 ist, desto fester werden die Stränge auf dem Rundballen 16 gehalten. Schließlich wird das Garn 30 von einem Garnvorrat getrennt und der fertig gebundene Rundballen 16 aus der Rundballenpresse 10 ausgerollt. Anstelle - wie gezeigt - einer einzigen Bindevorrichtung 14 können auch zwei Bindevorrichtungen 14, nämlich im Bereich jeder Seitenwand 18 vorgesehen werden.

Der Bindearm 22 ist um eine nicht dargestellte vertikale Achse in einer im wesentlichen horizontalen Ebene verschwenkbar, und zwar derart, dass er in einem Bereich der Seitenwände 18 den größten Abstand zu dem Rundballen 16 einnimmt, während er im Mittenbereich des Rundballens 16 diesem am nächsten kommt. Der Bindearm 22 ist in diesem Ausführungsbeispiel mit zwei Auslässen 32 versehen, aus denen das Garn 30 zu dem Rundballen 16 gelangen kann; dementsprechend sind auch zwei Stränge von Garn 30 vorgesehen, die jeweils auf die Umfangsfläche des Rundballens 16 aufgelegt werden. Es können auch mehr oder weniger Garne 30 und/oder Auslässe 32 vorgesehen werden. Das Garn 30 gelangt von einer nicht dargestellten aber an sich bekannten Vorratsrolle in den Bindearm 22, wird zuvor aber geringfügig abgebremst, damit sich das Garn 30 nicht in dem hohlen Bindearm 22 verfängt. Die Auslässe 32 befinden sich am Ende des Bindevorgangs relativ nahe an der betreffenden Seitenwand 18 und könnten das Garn 30 somit bis zur äußeren Kante des Rundballens 16 führen. Der Bindearm 22 kann auch in einer vertikalen oder wesentlich vertikalen Ebene geschwenkt werden.

Die Trennvorrichtung 24 ist ebenfalls in herkömmlicher Weise ausgeführt und enthält einen Amboss 34, ein Messer 36 und eine Betätigungsvorrichtung 38.

Der Amboss 34 ist als eine feste Stahlplatte ausgebildet, die an der Seitenwand 18 befestigt ist und sich im Laufbereich des Garns 30 am Bindevorgangsende befindet.

Das Messer 36 ist auf nicht gezeigte aber bekannte Weise vertikal schwenkbar an der Seitenwand 18 angebracht und wahrt außer im Schneidzustand einen Abstand zu dem Amboss 34, durch den das Garn 30 verlaufen kann. Das Messer 36 ist im wesentlichen so breit ausgebildet wie der Amboss 34.

Die Betätigungsvorrichtung 38 enthält eine gefederte Zugstange 40 mit einem Anschlag 42 und einem Hebelarm 44.

Die Betätigungsvorrichtung 38 dient dazu, das Messer 36 auf den Amboss 34 zu drücken und dabei das Garn 30 zu trennen, sobald sich der Bindearm 22 seiner Endstellung nähert. Demgemäss befindet sich der Anschlag 42 im Bewegungsbereich des freien Endes des Bindearms 22 und wird von diesem beaufschlagt, wenn dieser zu seinem Bewegungsende gelangt. Der als Haken ausgebildete Anschlag 42 zieht daraufhin an der Zugstange 40, die mit dem Hebelarm 44 schwenkbar verbunden ist. Der Hebelarm 44 ist starr mit dem Messer 36 verbunden und drückt dieses auf den Amboss 34, wenn die Zugstange 40 in der entsprechenden Richtung bewegt wurde. Während das Messer 36 das Garn 30 auf den Amboss 34 drückt, entsteht in dem Garn 30 für eine kurze Zeit eine erhöhte Spannung, die bewirkt, dass sich das Garn 30 in die Oberfläche des Rundballens 16 hinein zieht und mit den anderen Strängen des Garns 30 verkeilt.

Der Abstandhalter 26 ist in diesem Ausführungsbeispiel als eine zweifach gegensinnig gekröpfte Stahlstange ausgebildet und weist zwischen den Kröpfungen einen Führungsabschnitt 46 auf. Der Abstandshalter 26 dient dazu, den Abstand der letzten Stränge von Garn 30 auf dem Rundballen 16 zu dessen Stirnseite einzustellen, um zu vermeiden, dass das Garn 30 über die Kante des Rundballens 16 rutscht und lose wird. Während der Abstandshalter 26 starr angeordnet sein kann, kann er aber auch gegenüber der Seitenwand 18 einstellbar befestigt sein, wie dies z. B. in der EP 0 981 947 offenbart ist.

Die bisher erfolgte Beschreibung bezieht sich auf den Aufbau einer Rundballenpresse 10 und einer Bindevorrichtung 14, wie sie im Stand der Technik bekannt sind.

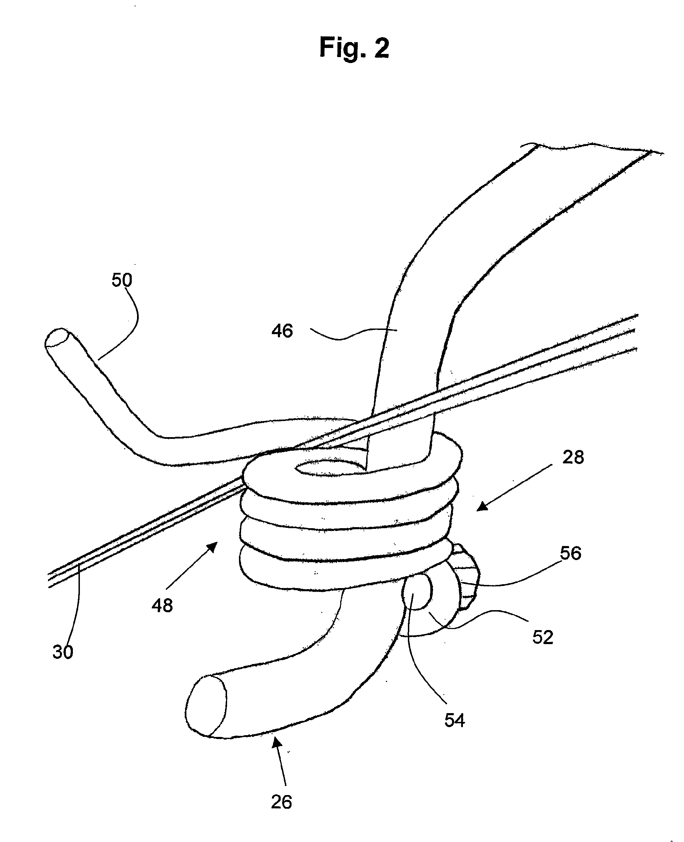

Die Garnbremse 28 ist mit dem betreffenden Bereich des Abstandshalters 26 in vergrößerter Darstellung in Figur 2 gezeigt. Danach ist die Garnbremse 28 in der Art eines Pick-Up-Zinkens oder Haspelzinkens aus Federstahl ausgebildet und enthält Federelemente 48, ein Fangende 50 und ein Halteende 52. Andere Ausführungen, insbesondere auch aus anderen Materialien, wie Kunststoff, Verbundstoff und dergleichen sind ebenfalls möglich. Die Befestigung der Garnbremse 28 auf einem Abstandshalter 26 ist nicht erforderlich, sondern nur vorteilhaft; vielmehr kann die Garnbremse 28 auch an der Seitenwand 18 oder dem Gehäuse 12 selbst an passender Stelle angebracht werden.

Die Federelemente 48 sind als vier zusammenhängende wendelartige Windungen ausgebildet, die einen Innenraum belassen, der von dem Führungsabschnitt 46 in axialer Richtung durchsetzt wird.

Das Fangende 50 stellt den Anfang der Federelemente 48 einerseits dar und erstreckt sich zunächst tangential und dann zu der Tangente gekröpft von den Federelementen 48 fort, so dass sein Ende radial wesentlich über die Federelemente 48 hinausreicht.

Das Halteende 52 stellt den entgegengesetzten Endbereich der Federelemente 48 dar und ist in diesem Ausführungsbeispiel als eine Öse ausgebildet, wie dies bei Zinken an Pick-ups und Haspeln bekannt ist. Das Halteende 52 wird mittels eines Zapfens 54 auf dem Abstandshalter 26 gesichert, der in dessen Führungsabschnitt 46 befestigt, z. B. angeschweißt ist. der Zapfen 54 ist als der Schaft einer Schraube ausgebildet, auf die eine Mutter 56 aufschraubbar ist, um das Halteende 52 an den Führungsabschnitt 46 anzudrücken.

Die Ausrichtung der Garnbremse 28 und insbesondere des Fangendes 50 ist derart gewählt, dass während der Bewegung des Bindearms 22 zu der Stirnseite des Rundballens 16 bzw. der Seitenwand 18 das Garn 30 in den Zwickelbereich zwischen dem Fangende 50 und des ihm zugelegenen Federelements 48 geführt wird. Je mehr sich die Auslässe 32 der Seitenwand 18 nähern, desto tiefer gelangt das Garn 30 zwischen die Federelemente 48, wodurch sich die Reibung zwischen dem Garn 30 und den Federelementen 48 und somit die Spannung in dem Garn 30 erhöht. Diese erhöhte Spannung führt dazu, dass sich das Garn 30 besonders tief in die Oberfläche des Rundballens 16 und zwischen die bereits aufgelegten Garnstränge zieht und besonders gut gehalten wird. Sobald der Bindearm 22 seine Endstellung erreicht und das Messer 36 betätigt hat, wird das Garn 30 getrennt. Nach dem Trennvorgang bleibt die hohe Spannung in dem abgeschnittenen Garnende erhalten, bis dieses aufgrund des sich weiter bewegenden Rundballens 16 aus der Garnbremse 28 heraus gezogen ist. Der besondere Effekt der Erfindung besteht darin, dass die Spannung in dem Garn 30 zwischen dem Messer 36 und dem Rundballen 16 besteht und nicht in dem Bereich zwischen dem Bindearm 22 und dem Messer 36.

## Patentansprüche

1. Rundballenpresse (10) mit einem Pressraum (20), einem Bindearm (22), einer Trennvorrichtung (24) und einer Garnbremse (28), **dadurch gekennzeichnet, dass** die Garnbremse (28) zwischen der Trennvorrichtung (24) und dem Pressraum (20) vorgesehen ist.

2. Rundballenpresse nach Anspruch 1, **dadurch gekennzeichnet, dass** die Garnbremse (28) als eine oder mehrere Federn mit aneinanderliegenden Federelementen (48) ausgebildet ist, die sich in dem Lauf des Garns (30) zwischen dem Bindearm (22) und dem Auflagebereich des Garns (30) auf dem Rundballen (16) erstrecken.

3. Rundballenpresse nach Anspruch 1 oder 2, **dadurch gekennzeichnet, dass** die Garnbremse (28) als eine Schraubenzugfeder ausgebildet ist.

4. Rundballenpresse nach einem oder mehreren der vorherigen Ansprüche, **dadurch gekennzeichnet, dass** die Garnbremse (28) mit einem Fangende (50) versehen ist.

5. Rundballenpresse nach einem oder mehreren der vorherigen Ansprüche, **dadurch gekennzeichnet, dass** die Garnbremse (28) mit einem Halteende (52), insbesondere in der Art einer Öse, versehen ist.

6. Rundballenpresse nach einem oder mehreren der vorherigen Ansprüche, **dadurch gekennzeichnet, dass** die Garnbremse (28) auf einem insbesondere einstellbaren Abstandhalter (26) angebracht ist.

7. Rundballenpresse nach einem oder mehreren der vorherigen Ansprüche, **dadurch gekennzeichnet, dass** die Anpresskraft der Garnbremse (28), insbesondere deren Federelemente (48), einstellbar ist.

8. Rundballenpresse nach einem oder mehreren der vorherigen Ansprüche, **dadurch gekennzeichnet, dass** die Garnbremse (28) entsprechend einem Zinken einer Pick-up oder einer Haspel einer Erntemaschine oder Erntebergungsmaschine ausgebildet ist.
